Europäisches Patentamt

European Patent Office

Office européen des brevets

(11) Publication number: **0 131 458**
**A1**

## EUROPEAN PATENT APPLICATION

(21) Application number: **84304659.0**

(22) Date of filing: **06.07.84**

(51) Int. Cl.⁴: **H 04 B 1/66**
**G 01 S 13/32**

(30) Priority: **08.07.83 GB 8318556**

(43) Date of publication of application:
**16.01.85 Bulletin 85/3**

(84) Designated Contracting States:
**DE FR GB**

(71) Applicant: **DECCA LIMITED**
**Western Road**
**Bracknell Berkshire RG12 1RG(GB)**

(72) Inventor: **Diederich, Pierre**
**Tara, 22 Verulam Avenue**
**Purley Surrey(GB)**

(72) Inventor: **Matthews, Peter Ash**
**1 Newall Park Road**
**Otley West Yorkshire(GB)**

(74) Representative: **Horton, Andrew Robert Grant et al,**
**BOULT, WADE & TENNANT 27 Furnival Street**
**London, EC4A 1PQ(GB)**

(54) Spread spectrum system.

(57) A spread spectrum system in which two sub-carrier signals symmetrically disposed about a carrier frequency extracted by phase-locked loops (44 and 45) are subjected to phase reversal keying by a pseudo-random binary sequence defining a chip rate to produce a spectrum of which the power distribution is concentrated away from the carrier frequency towards sidebands associated with the chip rate.

FIG. 4.

## "SPREAD SPECTRUM SYSTEM"

### BACKGROUND OF THE INVENTION

This invention relates to spread spectrum systems, particularly ranging systems in which a spread spectrum is radiated.  However the invention may be useful in other systems such as communication systems.

It has been well-known for many years to employ in ranging or navigation systems signals at multiple frequencies.  The higher frequencies are used to determine the resolution of the measurement whereas the lower frequencies resolve possible ambiguities in the use of the higher frequency signals.  In low frequency systems such as Decca Navigator or Omega, combinations of carrier tones are used to produce beat frequencies.  The lowest resulting beat frequency determines the ambiguity in the range measurement whereas the highest carrier frequency governs the resolution or accuracy of the measurement.  In line of sight ranging systems using VHF or higher frequencies, sub-carriers may be modulated onto a radio frequency carrier. These sub-carriers perform the same function as if they had been transmitted directly as mentioned in the foregoing; that is to say the highest sub-carrier may be used to determine resolution and the lowest beat note resulting from any combination of sub-carriers determines the possible ambiguity.

SUMMARY OF THE PRIOR ART

An alternative to the use of a limited number of sub-carrier frequencies is the use of a direct sequence spread spectrum where a very large number of line spectra are symmetrically disposed around a high frequency carrier. This may be achieved by subjecting the carrier to bi-phase modulation, particularly phase reversals at a rate determined by a pseudo-random binary sequence. Such a sequence has a characteristic frequency known as the word rate or chip rate. Systems in which such a spectrum is produced are described in British Patent Specifications Nos. 1326162, 1516659 and 1566442, which also describe various uses of spread spectra in information transmission systems and ranging.

The spectral distribution of a direct sequence spread spectrum follows the well-known (sin U)/U form where U is equal to $\pi$f(chip rate). The first nulls in the spectral pattern occur symmetrically at $U = \pm 1$. Where U is very much greater than unity, the amplitude of the spectrum decreases moderately fast, typically at 6dB/octave. The spectral lines within the (sin U)/U envelope determine resolution and ambiguity in a manner similar to that described above. A regular spacing between the lines determines the ambiguity and the frequency of the chip rate (U=1) determines the resolution. The autocorrelation function of the (sin U)/U distribution is, in fact, a sharp pulse, the width of which is inversely proportional to the chip rate. Unfortunately the amplitude of the spectrum is low in the region of $U = 1$ and in a noisy environment it is unlikely that a user would derive much benefit from the spectral lines associated with values of the modulus of U greater than 0.8. The lines of maximum energy are concentrated near the nominal value of the carrier frequency (U=0) and that concentration does not assist the obtaining of high resolution and accordingly accuracy in the measurement of range.

SUMMARY OF THE INVENTION

The present invention is based on the concept of a spread spectrum system in which two sub-carrier frequencies symmetrically disposed about a carrier frequency are subjected to phase reversal according to a pseudo random and binary sequence so as preferably to produce a signal of which the autocorrelation function is sharply defined but in which the spectral distribution is concentrated away from the carrier frequency (actual or nominal) towards the sidebands associated with the chip rate, and includes within its scope equivalent means of attaining a similar result.

BRIEF DESCRIPTION OF THE DRAWINGS

Figure 1 illustrates the spectrum of the form (sin U)/U;

Figures 2 and 3 illustrate two spectra which may be produced in accordance with the present invention;

Figure 4 is a schematic representation of a circuit which may be used to produce the spectrum shown in Figure 3 and

Figure 5 illustrates comparative examples of spectra.

DETAILED DESCRIPTION

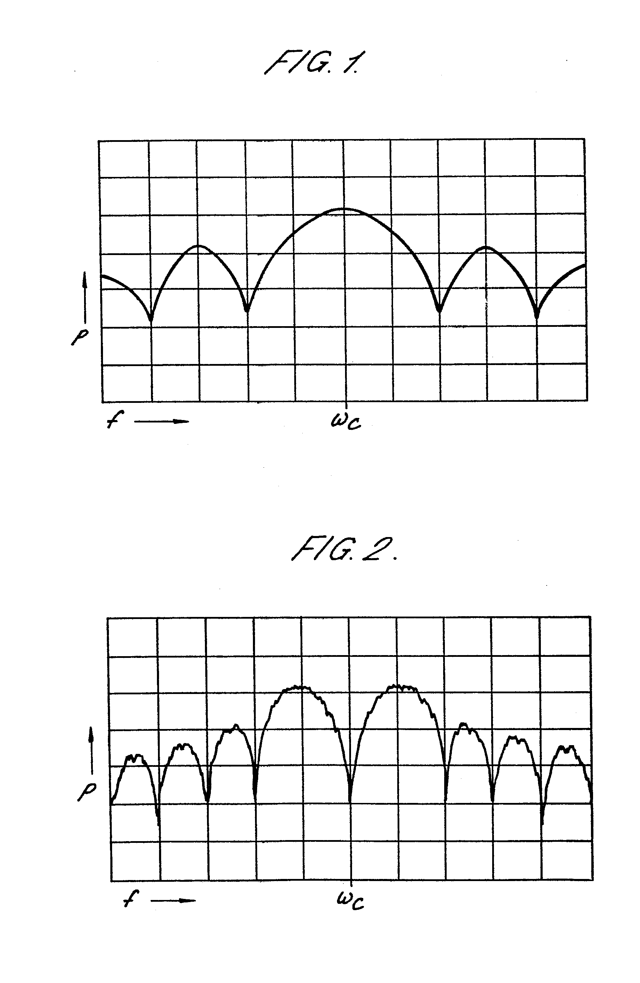

Figure 1 illustrates the well-known (sin U)/U spectrum; the vertical scale of power P is 10dB per division and the horizontal scale of frequency f is 10 Kilohertz per division. As is explained in the foregoing the maximum energy is concentrated near the nominal value of the carrier frequency, at U=0.

A more desirable shape for the spectral envelope would be one in which the amplitude at U=0 is low but where substantially all the available energy is concentrated within 2:1 of the highest frequency needed to obtain the required resolution. It would also be useful if beyond that highest frequency the spectral density fell off much more sharply than the 6dB/octave reduction associated with the (sin U)/U envelope shown in Figure 1.

The spectrum shown in Figure 1 may be produced, as hereinbefore mentioned, by subjecting a single frequency carrier to phase reversals in a pseudo-random binary sequence. If however phase reversals are applied to a pair of sub-carriers symmetrically disposed around the nominal carrier frequency one may obtain a much more desirable spectral shape.

The phase reversals can be applied in at least two different ways. The two sub-carriers may be added in phase before the application of the phase reversal operation jointly to them; alternatively the sub-carriers may be phase-keyed while they are in anti-phase.

The two sub-carriers may be generated by combining an original carrier and a chip rate frequency by multiplicative mixing in a double balanced mixer from which only sum and difference frequencies emerge. If high spectral purity is particularly important, phase-locked loops may be used to extract only the sum and difference frequencies. This further allows the coordination of both sidebands in phase or in anti-phase. A pseudo-random binary sequence generated from the same chip rate can now be used to produce the desired spectral shape.

By simple analysis, one may see that in the example wherein both sidebands are added, one obtains

$$\frac{1}{2}\left| \frac{\sin(u-1)}{(u-1)} + \frac{\sin(u+1)}{(u+1)} \right| = \left| \frac{u\sin u}{(u^2-1)} \right| \quad \dots\dots(1)$$

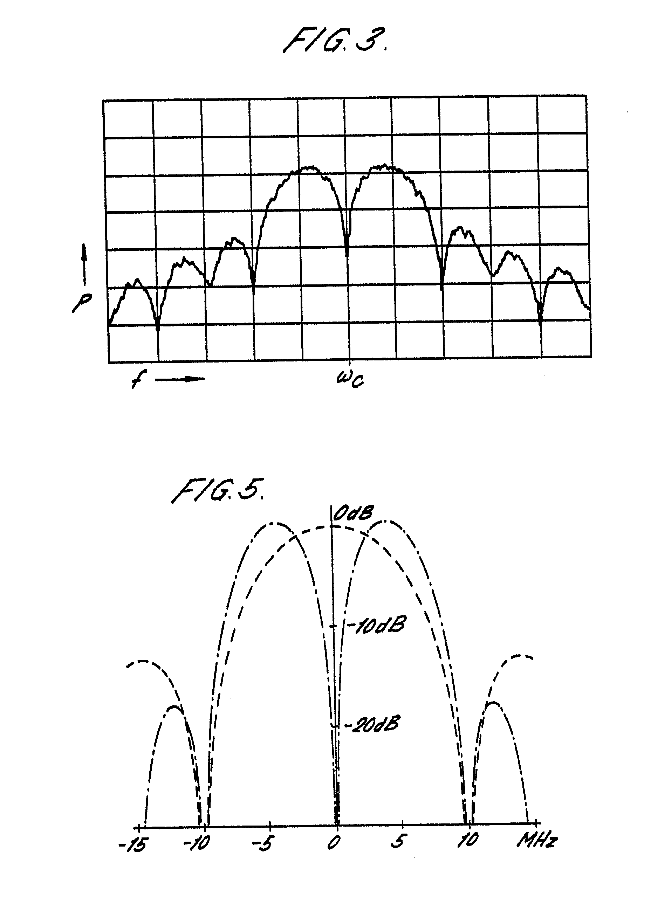

A spectrum produced by adding the sidebands in accordance with equation (1) is shown in Figure 2 of the drawings.

If the two sub-carriers are subtracted in phase one obtains

$$\frac{1}{2}\left| \frac{\sin(u-1)}{(u-1)} - \frac{\sin(u+1)}{(u+1)} \right| = \left| \frac{u\sin u}{(u^2-1)} \right| \quad \dots\dots\dots(2)$$

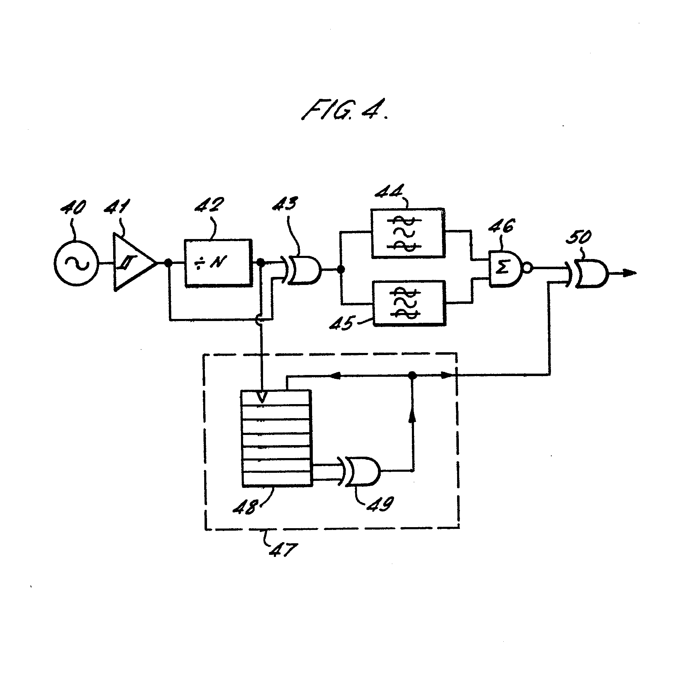

A spectrum produced in accordance with equation (2) is shown in Figure 3.

The spectra shown in Figures 2 and 3 have low spectral density near u=0 but it is easily seen that the response for the magnitude of u greater than unity decreases quite sharply, at approximately 12dB/octave, for the spectrum attained according to equation 2 and as shown in Figure 3 than for the spectrum attained according to equation 1 and shown in Figure 2. The latter only diminishes at approximately 6dB/octave. High spectral power is maintained up to around u=1.7, which means that the resolution of the associated range measurement can make full use of frequencies up to that value. Thus both spectra are preferable to that shown in Figure 1 but that of Figure 3 is preferable to that of Figure 2.

The present invention may be embodied in a fairly simple manner; Figure 4 illustrates one suitable embodiment of an encoder which can be used to produce a spectrum of the kind shown in Figure 3.

In Figure 4, an oscillator 40 runs at a frequency $W_c$, which may be, for example, $1MH_z$. The output of the oscillator is shaped in shaper 41 to produce a square wave clock signal which is received at the input of a divider 42, which provides a division ratio of N. The output of the divider and the clock signals are inputs to an exclusive -OR gate 43. The resultant output is a line spectrum of which the lines are spaced at intervals $W_d = W_c/N$. The spectrum is received by two band-pass filters, constituted by phase-locked loops 44 and 45, each arranged in a manner known per se. The loops select a respective one of the two frequencies $(W_c + W_a)$ and $(W_c - W_a)$ from the line spectrum and feed them in anti-phase to an adder constituted by an OR gate 46.

The clock signal as divided by N in the divider clocks a pseudo-random noise generator 47 which is of generally known form. In this embodiment the generator comprises a shift register 48 of which the last two stages are connected to the inputs of an exclusive OR gate 49 of which the output comprises a binary pseudo-random sequence at the chip rate. The output of the gate 49 is coupled to the input of the shift register and also to one input of an exclusive -OR gate 50 of which the other input is coupled to the output of the OR gate 46. The gate 50 effects phase-reversal keying of the sub-carriers by the pseudo-random sequence to produce, at output terminal 49, a spectrum as shown in Figure 3.

The output spectrum may be used, as hereinbefore mentioned, in a ranging system or in a communication system of the kinds generally described, for example, in the aforementioned specifications.

It may be readily shown that the spectrum of Figure 2 or Figure 3, for a given chip rate and pseudo-random binary sequence, has a sharply defined autocorrelation function with a narrow peak around zero time-shift and low level ripple, similar to the autocorrelation function associated with an ordinary (sin U)/U spread spectrum. However, the spectral distribution is concentrated away from the frequency of the carrier, actual or nominal, towards the sidebands associated with chip rate. For a given total signal power level and ambient noise power spectral density, the variance of range measurements can be reduced by virtue of the improvement in the signal to noise ratio of the higher sideband frequencies without significantly increasing the risk of introducing ambiguities. Preferably the signals outside the useful band are attenuated by approximately 12dB/octave thus lessening the requirement for frequency selective band-pass filters.

Figure 5 illustrates, for comparison, in dashed lines a (sin U)/U spectrum and, in chain lines, a typical spectrum associated with the present invention.

CLAIMS:

1.  A spread spectrum system comprising:

a generator of a pseudo-random binary sequence;

means for producing two sub-carrier signals symmetrically disposed about a carrier frequency; and

encoding means for subjecting both said sub-carrier signals to phase reversals in accordance with said sequence.

2.  A system according to claim 1, further comprising means for combining said sub-carrier signals in anti-phase before they are subjected to said phase reversals.

3.  A system according to claim 1 in which said means for producing two sub-carrier signals comprises means for producing a line spectrum including a carrier frequency $W_c$ and sideband frequencies spaced at intervals of $W_d$ and two narrow band-pass filters selecting signals at the frequencies $(W_c + W_d)$ and $(W_c - W_d)$ respectively.

4.  A system according to claim 3 in which the means for producing said line spectrum comprises an oscillator, a divider receiving an output of the oscillator, and means providing exclusive -OR gating of an output of the divider and an output of the oscillator.

5.    A method of generating a spread spectrum, comprising the steps of:

generating a pseudo-random binary sequence defining a chip rate;

generating two sub-carrier signals symmetrically disposed about a nominal carrier frequency; and

subjecting the two sub-carrier signals to phase reversal keying in accordance with said sequence, whereby to produce a spectrum of which the power distribution is concentrated away from the carrier frequency towards sidebands associated with the chip rate.

6.    A method according to claim 5 including the step of adding the two sub-carrier signals in phase before the step of phase reversal keying.

7.    A method according to claim 5, in which the step of phase keying is applied while the sub-carrier signals are in anti-phase.

FIG. 1.

FIG. 2.

0131458

2/3

FIG. 3.

FIG. 5.

FIG. 4.

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 794 978 (P. STARON) <br> * column 16, lines 36-49; figure 9 * | 1,5 | H 04 B 1/66 <br> G 01 S 13/32 |
| A | R.C. DIXON: "Spread spectrum systems", 1976, pages 46-48, 187-188, John Wiley & Sons, New York, US; <br> * pages 46-48, paragraph: "FH/DS modulation"; pages 187-188, paragraph: "Transmitted-reference methods" * | 1,5 | |
| A | US-A-3 519 746 (F.S. GUTLEBER) <br> * column 10, lines 32-41; figure 9 * | 1,5 | |
| A | NATIONAL TELECOMMUNICATIONS CONFERENCE, 27th-29th November 1979, Washington, D.C., CONFERENCE RECORD, vol. 3, pages 54.4.1 - 54.4.5, IEEE, New York, US; B.H. BATSON et al.: "Spread spectrum techniques for the space shuttle" <br> * page 54.4.4, left-hand column, lines 8-23; figure 5 * | 1,5 | **TECHNICAL FIELDS SEARCHED (Int. Cl. 3)** <br><br> H 04 B <br> G 01 S |
| A | GB-A-2 075 800 (INTERNATIONAL STANDARD ELECTRIC CORP.) <br> * page 3, lines 56-112; figure 2 * | 3 | |

-/-

The present search report has been drawn up for all claims

| Place of search | Date of completion of the search | Examiner |
|---|---|---|
| THE HAGUE | 16-10-1984 | VAN WEEL E.J.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## EUROPEAN SEARCH REPORT

European Patent Office

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. ³) |
| A | DE-A-3 129 912 (SIEMENS)<br>* page 3, lines 5-36; figure *<br><br>--- | 4 | |
| D,A | GB-A-1 566 442 (MARCONI)<br>* page 2, lines 18-40; figure 1 *<br><br>--- | 4 | |
| D,A | GB-A-1 326 162 (INTERNATIONAL STANDARD ELECTRIC CORP.)<br>* page 2, lines 11-46; page 3, lines 27-43; figures 1,2 *<br><br>----- | 1,5 | |
| | | | TECHNICAL FIELDS SEARCHED (Int. Cl. ³) |

The present search report has been drawn up for all claims

| Place of search | Date of completion of the search | Examiner |
|---|---|---|
| THE HAGUE | 16-10-1984 | VAN WEEL E.J.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82